Europäisches Patentamt

European Patent Office

Office européen des brevets

(19)

(11) Veröffentlichungsnummer: **0 074 490**
**B1**

(12) # EUROPÄISCHE PATENTSCHRIFT

(45) Veröffentlichungstag der Patentschrift:
14.01.87

(51) Int. Cl.⁴: **F 24 D 3/00**

(21) Anmeldenummer: **82107160.2**

(22) Anmeldetag: **07.08.82**

(54) Fussboden mit integrierter Warmwasser-Fussbodenheizung.

(30) Priorität: **10.09.81 DE 3135821**

(43) Veröffentlichungstag der Anmeldung:
**23.03.83 Patentblatt 83/12**

(45) Bekanntmachung des Hinweises auf die Patenterteilung:
**14.01.87 Patentblatt 87/3**

(84) Benannte Vertragsstaaten:
**AT BE CH DE FR GB IT LI LU NL SE**

(56) Entgegenhaltungen:
**CH-A-430 110**
**CH-A-617 999**
**DE-A-2 551 089**
**DE-A-2 755 323**
**DE-U-7 709 396**
**FR-A-2 382 279**
**GB-A-11 078**
**LU-A-80 842**

(73) Patentinhaber: **Ritter Heiztechnik GmbH,
Weierstrasse 119, D-4200 Oberhausen (DE)**

(72) Erfinder: **Ritter, Karl, Peddenkamp 45, D-4030
Ratingen 6 (DE)**

(74) Vertreter: **Gesthuysen, Hans Dieter, Dipl.- Ing.,
Patentanwälte Gesthuysen + von Rohr
Huyssenallee 15 Postfach 10 13 33, D-4300 Essen
1 (DE)**

EP 0 074 490 B1

LIBER, STOCKHOLM 1987

## Beschreibung

Die Erfindung betrifft einen Fußboden mit integrierter Warmwasser-Fußbodenheizung zum Aufbringen auf einen Fußbodenunterbau, bestehend aus einer Wärmedämmschicht, einer auf der Wärmedämmschicht angeordneten, aus metallischen Wärmeverteilungsplatten aufgebauten Zwischenschicht, einer Mehrzahl von auf der Zwischenschicht angeordneten, über Befestigungselemente gegen seitliches Verschieben gesicherten Heizrohren und einer die Heizrohre außerhalb des Randbereichs des Fußbodenunterbaus einbettenden Estrichauflage.

Fußböden der zuvor erläuterten Art sind als Fußböden mit integrierter Warmwasser-Fußbodenheizung in Naßeinbettung in verschiedenen Ausführungsformen bekannt. Bei dem bekannten Fußboden, von dem die vorliegende Erfindung ausgeht (CH-A-617 999, ähnlich auch DE-U 77 09 396) hat der Aufbau der Zwischenschicht aus metallischen Wärmeverteilungsplatten zur Folge, daß eine gleichmäßige Wärmeverteilung unter der Estrichauflage gebildet wird, so daß sich auch auf der Oberfläche der Estrichauflage eine nahezu optimal gleichmäßige Wärmeverteilung ergibt. Diese Konstruktion hat weiter den Vorteil, daß die Estrichauflage beim Aufbau des Fußbodens relativ stark verdichtet werden kann, da die Zwischenschicht ein nur wenig federndes Widerlager bildet. Schließlich treten Rißbildungen in der Estrichauflage selten auf, da über die Zwischenschicht aus metallischen Wärmeverteilungsplatten eine breite Belastungsverteilung erzielt wird. Selbst dann, wenn Risse in der Estrichauflage auftreten, führen diese Risse nicht zum Auftreten von Scherkräften an den Heizrohren. Sind die Heizrohre verlegt und durch Rohrhalter arretiert, so wird die Estrichauflage aufgebracht, so daß die Heizrohre an drei Seiten von Estrich umgeben sind.

Der zuvor erläuterte bekannte Fußboden ist in punkto Verlegemöglichkeiten problematisch. Es ist nämlich ausschließlich der Sorgfalt des jeweiligen Monteurs überlassen, die notwendigen Mindestbiegeradien der Heizrohre in den Randbereichen des Fußbodens, also in den Umkehrbögen, einzuhalten. Außerdem sind die Heizrohre überall fest von der Estrichauflage umgeben, insbesondere auch im Bereich der Umkehrbögen. Dort ist es also den Heizrohren nicht möglich, sich ungehindert auszudehnen und zusammenzuziehen, so daß hier häufig Schäden an den Heizrohren auftreten.

Neben dem zuvor erläuterten Fußboden mit integrierter Warmwasser-Fußboden heizung in Naßeinbettung sind auch Fußböden mit integrierter Warmwasser-Fußbodenheizung in Trockenbaumontage bekannt (LU-A-80 842 und DE-A-27 55 323). Bei einem solchen Fußboden in Trockenbaumontage sind die Heizrohre nirgends in der Estrichauflage eingebettet, sondern befinden sich in einer durchgehenden Heizebene, die unter Umständen gleichmäßig verteilt angeordnete Stütznocken aufweist, zwischen denen die Heizrohre angeordnet sind, und die jedenfalls nach oben hin durch Wärmeverteilungsplatten abgedeckt ist. Auf den Wärmeverteilungsplatten befindet sich dann als weitere gesonderte Ebene die Estrichauflage. Die Heizrohre kommen also hier nicht mit der Estrichauflage in Kontakt, so daß auch die zuvor erläuterten Schwierigkeiten einer Warmwasser-Fußbodenheizung in Naßeinbettung nicht auftreten. Eine solche Warmwasser-Fußbodenheizung in Trockenbaumontage hat allerdings Schwierigkeiten in bezug auf die Wärmeverteilung nach oben hin und ist wegen der Notwendigkeit, eine besonders gestaltete Heizebene auf der gesamten Fläche des Fußbodens versehen zu müssen, konstruktiv und wirtschaftlich relativ aufwendig.

Der Erfindung liegt die Aufgabe zugrunde, einen Fußboden der eingangs erläuterten Art, also mit einer die Heizrohre außerhalb des Randbereichs des Fußbodenunterbaus einbettenden Estrichauflage, so auszugestalten und weiterzubilden, daß die Heizrohre sich im Bereich der Umkehrbögen ungehindert zu bewegen vermögen.

Der erfindungsgemäße Fußboden, bei dem die zuvor aufgezeigte Aufgabe gelöst ist, ist dadurch gekennzeichnet, daß die Wärmedämmschicht im Randbereich des Fußbodenunterbaus mit über die Ebene der Zwischenschicht nach oben abragenden, rasterartig angeordneten Stütz- und Führungserhebungen versehen ist, daß die Zwischenschicht im Randbereich des Fußbodenunterbaus mit zu den Stütz und Führungserhebungen korrespondierenden Ausnehmungen versehen ist, daß die Heizrohre zwischen den Stütz- und Führungserhebungen verlaufend angeordnet sind und daß zusätzliche, auf den Stütz- und Führungserhebungen aufliegende, metallische Abdeckplatten vorgesehen sind, auf denen die Estrichauflage aufgebracht ist. Wesentlich ist also, daß im Randbereich des Fußbodenunterbaus eine Art Trockenbaumontage verwirklicht wird, daß also dort die erfindungsgemäß vorgesehenen Stütz- und Führungserhebungen über die Ebene der Zwischenschicht so nach oben abragen, daß die Heizrohre dazwischen verlaufend angeordnet werden können. Es kommt hierbei nicht darauf an, daß die Stützund Führungserhebungen integraler Bestandteil der Wärmedämmschicht sind. Sie können vielmehr auch als eigenständige Bauelemente auf die Wärmedämmschicht oder auf die Zwischenschicht aufgeklebt sein. Mit den Stütz- und Führungserhebungen im Randbereich des Fußbodenunterbaus wird jedenfalls der Notwendigkeit Rechnung getragen, daß die Heizrohre im Bereich der Umkehrbögen mit einem erheblichen Spiel verlegt werden sollten, damit temperaturbedingte Längenänderungen der Heizrohre nicht zum Auftreten unzulässig hoher Spannung in den Wandungen der Heizrohre führen.

Die auf den Stütz- und Führungserhebungen aufliegenden metallischen Abdeckplatten führen einerseits zu einer passablen Wärmeverteilung auch im Randbereich des Fußbodenunterbaus in die Estrichauflage hinein, dienen andererseits als glatte Unterlage für die Estrichauflage und verhindern schließlich, daß die Heizrohre im für Schäden kritischen Bereich der Umkehrbögen in der Estrichauflage eingebettet sind.

Die Lehre der Erfindung schafft die Möglichkeit, auf der überwiegenden Fläche eines Fußbodens die bekannte, konstruktiv einfache und von der Wärmeverteilung her optimal bewährte Naßeinbettung zu verwirklichen, ohne auf die wesentlichen Vorteile der Trockenbaumontage zu verzichten, die, wie erfindungsgemäß eben erkannt worden ist, primär im Randbereich des Fußbodenunterbaus relevant sind. Theoretisch wäre es natürlich denkbar, daß im Rahmen der Erfindung die Warmwasser-Fußbodenheizung über die gesamte Fläche des Fußbodens in Trockenbaumontage ausgeführt ist, jedoch hat dies dann natürlich gleichfalls die weiter oben erläuterten Nachteile.

Die rasterartige Anordnung der Stütz- und Führungserhebungen im Randbereich des Fußbodenunterbaus führt zu dem Ergebnis, daß die Mindestbiegeradien der Heizrohre von selbst durch einen Monteur leichter eingehalten werden können. Dabei kommt es bei geschickter Wahl des Rasters für die Anordnung der Stütz- und Führungserhebungen nicht darauf an, welche Verlegedichte (A 8, A 16, A 25 od. dgl.) gewählt wird.

Die Abdeckplatten sollten möglichst so ausgebildet und/oder angeordnet sein, daß sie nicht verrutschen können. Dazu empfiehlt es sich, die Abdeckplatten fest mit der Wärmedämmschicht und/oder der Zwischenschicht zu verbinden.

Für den Randbereich des Fußbodenunterbaus können in besonders zweckmäßiger Weise mit den Stütz- und Führungserhebungen versehene Wärmedämmelemente vorgesehen sein. Dabei empfiehlt sich eine größenmäßige Abstimmung der Wärmedämmelemente und Wärmeverteilungsplatten sowie der entsprechend zugehörigen metallischen Abdeckplatten aufeinander.

Das Baukastensystem, das zuvor in seinen Grundzügen erläutert worden ist, wird noch optimiert, wenn jeweils ein Wärmedämmelement, eine Wärmeverteilungsplatte und eine Abdeckplatte gemeinsam zu einem Fußboden-Randelement zusammengefaßt sind. Hieraus ergibt sich der Vorteil, daß eine Vorfertigung eines solchen Fußboden-Randelementes möglich ist, daß also der erfindungswesentliche Bereich des Fußbodens als selbständiges, für sich handelbares Teil ausgebildet ist. Die Zusammenfassung zu einem Fußboden-Randelement ist besonders leicht möglich, wenn an dem äußeren Rand eine hochstehende Randleiste aus wärmedämmendem Material vorgesehen ist. Über diese Randleiste lassen sich einerseits die einzelnen Teile des Fußboden-Randelementes leicht miteinander verbinden, andererseits gibt diese Randleiste eine seitliche Begrenzung für den aufzubringenden Estrich. Wesentlich ist in jedem Fall, daß die Abdeckplatte des Fußboden-Randelementes abnehmbar ist, damit die Heizrohre zwischen die Stütz- und Führungserhebungen des Fußboden-Randelementes eingelegt werden können. Die Abdeckplatte kann beispielsweise zur Verbindung auf die Oberseiten der Stütz- und Führungserhebungen aufgerastet werden.

Die weiter oben erläuterte rasterartige Anordnung der Stütz- und Führungserhebungen erlaubt es bei geschickter Wahl des Rasters und insbesondere symmetrischer Anordnung der Stütz- und Führungserhebungen, mit einem einzigen Typ eines Fußboden-Randelementes für alle Verlegedichten (A 8, A 16, A 25 usw.) auszukommen. Für übliche Heizrohre von Warmwasser-Fußbodenheizungen haben sich im wesentlichen kreisrunde Querschnitte der Stütz- und Führungserhebungen von 2 bis 8 cm, insbesondere von ca. 5 cm, und Abstände der Stütz- und Führungserhebungen von etwa 5 cm als zweckmäßig erwiesen, wobei die Höhe der Stütz- und Führungserhebungen dem Außendurchmesser der verwendeten Heizrohre entsprechen muß.

Auch bei dem erfindungsgemäßen Fußboden müssen die Heizrohre auf der Zwischenschicht ortsfest angeordnet werden. Dazu sind hier die Befestigungselemente für die Heizrohre als jeweils zwei Heizrohre miteinander verbindende Befestigungsbügel ausgeführt. Vorzugsweise weist dabei jeder Befestigungsbügel einen Verbindungssteg und an den Enden des Verbindungssteges angeordnete Aufnahmekammern auf. Mehrere Befestigungsbügel können einstückig miteinander ausgeführt sein. Die Länge des Verbindungssteges gibt dabei den Verlegeabstand vor. Damit ist gewährleistet, daß die richtigen Verlegeabstände eingehalten werden, was auch für das Einhalten der Mindestbiegeradien der Heizrohre von Bedeutung ist. Die Befestigungsbügel müssen nicht unbedingt in der Zwischenschicht oder der Wärmedämmschicht verankert werden. Sofern die Gefahr des Aufschwimmens bei Aufbringen der Estrichauflage besteht, können die Befestigungsbügel natürlich gleichwohl verankert werden. Besser als die bekannten Verankerungsmöglichkeiten mit in die Wärmedämmschicht hinein ragenden Krampen ist hier eine Verankerung über einen Klebefuß. Der Klebefuß kann bei jedem Befestigungselement an dem Verbindungssteg vorgesehen sein, so daß die Befestigungselemente leicht auf die Oberseite der Zwischenschicht aufgeklebt werden können. Durch diese Konstruktion werden unerwünschte Wärmebrücken von den Heizrohren direkt in die Wärmedämmschicht verhindert.

Schließlich können auf die Heizrohre in dem Bereich, in dem sie normalerweise voll in der Estrichauflage eingebettet sind, bereichsweise, insbesondere im Bereich von Dehnungsfugen, im Querschnitt im wesentlichen U-förmige Schutzbleche aufgesetzt sein. Diese Schutzbleche, die vom Profil her etwa den bekannten Wärmeverteilungsflächen entsprechen, aber umgekehrt angeordnet werden, gewährleisten, daß die an Dehnungsfugen mitunter auftretenden Scherkräfte mit absoluter Sicherheit nicht an die Heizrohre gelangen können.

Bei Versuchen hat sich überraschenderweise gezeigt, daß die metallischen Wärmeverteilungsplatten zwar auf ihrer Oberseite zweckmäßigerweise metallisch blank sein sollten, um Wärmestrahlung nach oben hin zu reflektieren, daß aber bei einer metallisch blanken Unterseite auch in die Wärmedämmschicht noch eine erhebliche Wärmeabgabe erfolgt. Um hier Abhilfe zu schaffen, hat es sich als sehr zweckmäßig erwiesen, zwischen den Wärmeverteilungsplatten und der Wärmedämmschicht eine dünne Zusatzschicht zur Verminderung der Wärmeabstrahlung in die Wärmedämmschicht vorzusehen. In der Praxis ist diese Zusatzschicht zweckmäßigerweise mit der Unterseite der Wärmeverteilungsplatten verbunden, nämlich vorzugsweise als Lackschicht oder Kunststoffbeschichtung ausgeführt. Schon eine dünne Lackschicht auf der Unterseite der Wärmeverteilungsplatten führt überraschenderweise zu einer ganz erheblich verbesserten Wärmedämmung nach unten, - trotz der an sich dort vorhandenen Wärmedämmschicht.

In ähnlicher Weise, wie eine Zusatzschicht bei den Wärmeverteilungsplatten von Vorteil ist, kann eine solche Zusatzschicht auch bei den Abdeckplatten von Vorteil sein. Diese Zusatzschicht sollte auf der Unterseite der Abdeckplatten angeordnet sein, d. h. die Abdeckplatten können vorzugsweise auf der Unterseite mit einer die Wärmestrahlung von den Heizrohren absorbierenden Absorptionsschicht, vorzugsweise ebenfalls einer Lackschicht oder einer Kunststoffbeschichtung, versehen sein. Nach oben hin sollten auch die Abdeckplatten wiederum metallisch blank sein, um die von unten aufgenommene Wärme möglichst effektiv nach oben in die Estrichauflage abzugeben.

Aus produktionstechnischen Grunden hat es sich für die zuvor erläuterten Ausführungsformen als praktisch erwiesen, tatsächlich die Wärmeverteilungsplatten bzw. die Abdeckplatten beidseitig zu beschichten, da ansonsten wegen der unterschiedlichen Wärmeausdehnungskoeffizienten von Metall und Beschichtung Verwerfungen und Wölbungen der Wärmeverteilungsplatten bzw. Abdeckplatten kaum zu vermeiden sind. Es hat sich aber gezeigt, daß die zuvor erläuterten Vorteile auch dann nahezu ungemindert erhalten bleiben.

Der erfindungsgemäße Fußboden mit integrierter Warmwasser-Fußbodenheizung vereint, wie die voranstehenden Ausführungen zeigen, in sich die Vorteile der Warmwasser-Fußbodenheizung in Naßeinbettung mit den Vorteilen der Warmwasser-Fußbodenheizung in Trockenbaumontage, wobei gleichzeitig die Nachteile beider Systeme vermieden werden. Zusätzlich ist der erfindungsgemäße Fußboden auch noch besonders kostengünstig herstellbar, da auch speziell geschäumte Profilelemente, bis auf Rand-Wärmedämmelemente, verzichtet werden kann. Auch speziell profilierte Wärmeverteilungsbleche müssen nicht vorgesehen werden.

Im folgenden wird die Erfindung anhand einer lediglich Ausführungsbeispiele darstellenden Zeichnung näher erläutert; es zeigt

Fig. 1 in perspektivischer Ansicht, teilweise geschnitten, ein Ausführungsbeispiel eines Fußbodens mit integrierter Warmwasser-Fußbodenheizung,

Fig. 2 im Querschnitt den Fußboden nach Fig. 1,

Fig. 3 im Querschnitt den Randbereich eines Fußbodens nach Fig. 1 und

Fig. 4 in Draufsicht ein Wärmedämmelement im Randbereich eines Fußbodens (a bis c) nach Fig 1 mit in verschiedenen Anordnungen verlegten Heizrohren

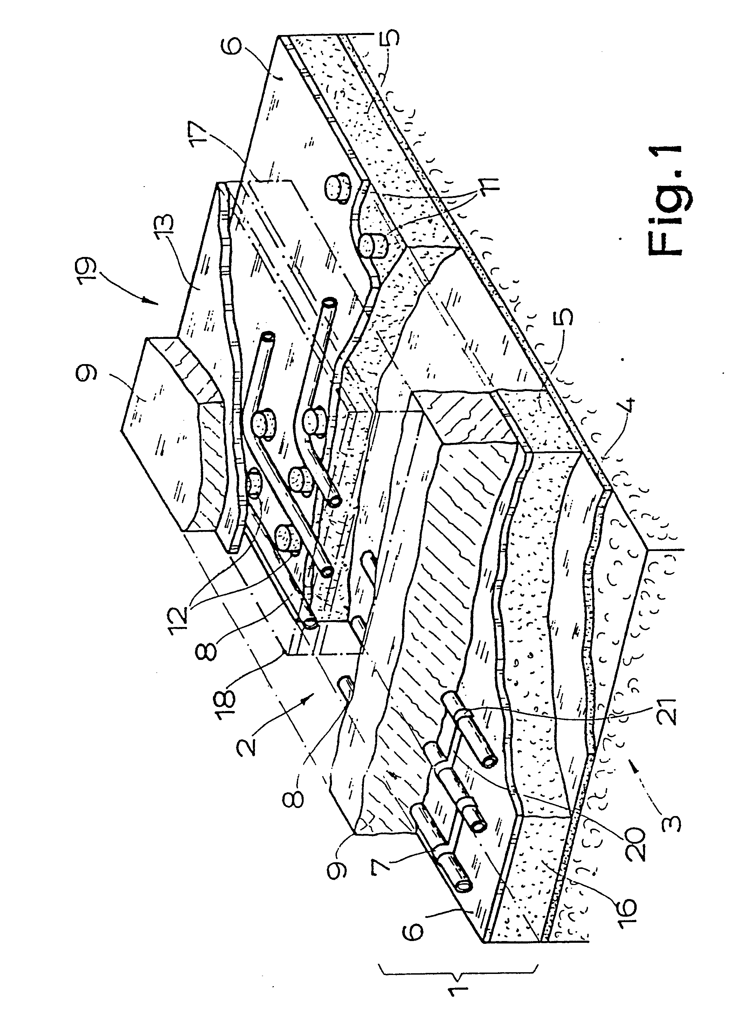

Der in Fig. 1 in perspektivischer Ansicht dargestellte Fußboden 1 ist mit einer integrierten Warmwasser-Fußbodenheizung 2 versehen, die nur schematisch angedeutet ist. Dieser Fußboden 1 ist zum Aufbringen auf einen gleichfalls angedeuteten Fußbodenunterbau 3 bestimmt, beispielsweise auf eine Betondecke.

Der Fußboden 1 besteht aus einer Trittschalldämmschicht 4, einer auf der Trittschalldämmschicht 4 angeordneten Wärmedämmschicht 5, einer auf der Wärmedämmschicht 5 angeordneten Zwischenschicht 6, einer Mehrzahl von auf der Zwischenschicht 6 angeordneten, über Befestigungselemente 7 gegen seitliches Verschieben gesicherten Heizrohren 8 und einer auf die Zwischenschicht 6 aufgebrachten, die Heizrohre 8 einbettenden Estrichauflage 9.

In Fig. 1 sind nur einige Heizrohre 8 angedeutet, ferner ist angedeutet, daß benachbarte Heizrohre 8 in unterschiedlichen Richtungen von einem Wärmeträgermedium durchflossen werden.

Die in Fig. 1 gezeigte Zwischenschicht 6 besteht aus metallischen Wärmeverteilungsplatten 18, so daß sich eine gute Wärmeverteilung in horizontaler Ebene ergibt und dadurch eine gleichmäßige Wärmeverteilung auf der Oberfläche der Estrichauflage 9 gegeben ist.

Die Wärmedämmschicht 5 ist im Randbereich des Fußbodenunterbaus 3 mit von der Oberfläche der Wärmedämmschicht 5 nach oben abragenden Stütz- und Führungserhebungen 11 versehen. Die Heizrohre 8 sind zwischen den Stütz- und Führungserhebungen 11 verlaufend angeordnet. Im Randbereich des Fußbodenunterbaus 3 sind ferner die metallischen Wärmeverteilungsplatten 18 mit zu den Stütz- und Führungserhebungen 11 der Wärmedämmschicht 5 korrespondierenden Ausnehmungen 12 versehen. Die Wärmeverteilungsplatten 18 im Mittelbereich und im Randbereich des Fußbodenunterbaus 3 liegen also in ein und derselben Ebene.

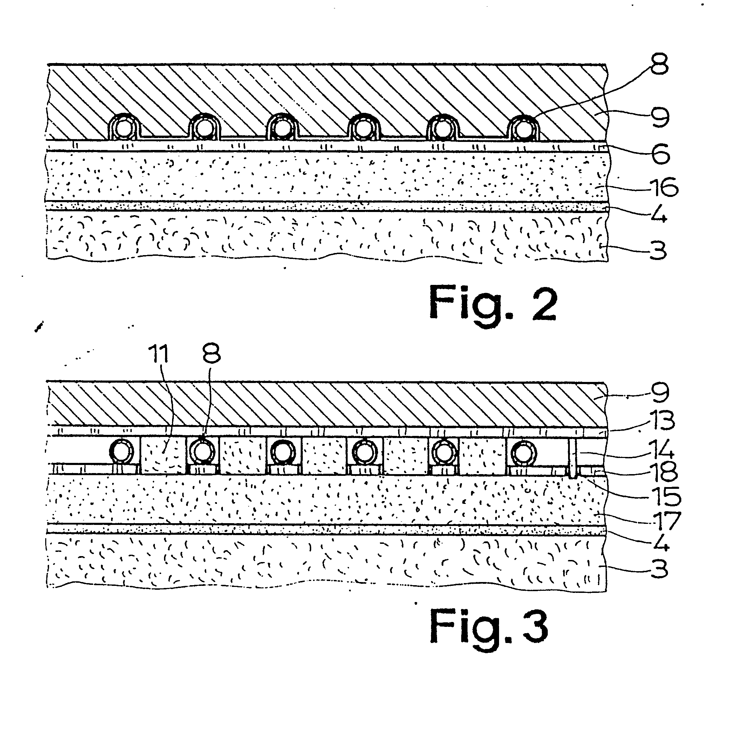

Aus Fig. 3 ergibt sich noch deutlicher als aus Fig. 1, daß im Randbereich des Fußbodenunterbaus 3 zusätzliche, auf den Stütz- und Führungserhebungen 11 aufliegende metallische Abdeckplatten 13 vorgesehen sind. Diese Abdeckplatten 13 sind fest mit den Wärmeverteilungsplatten 18 verbunden. Dazu sind die Abdeckplatten 13 mit nach unten abragenden Bügeln 14 versehen, die in Ausnehmungen 15 der Wärmeverteilungsplatten 18 eingreifen.

Die Wärmedämmschicht 5 besteht aus einzelnen Wärmedämmelementen 16, 17. Im Randbereich des Fußbodenunterbaus 3 sind dementsprechend die Wärmedämmelemente 17 mit den Stütz- und Führungserhebungen 11 versehen.

Die Wärmedämmelemente 17, die Wärmeverteilungsplatten 18 und die Abdeckplatten 13 sind größenmäßig aufeinander abgestimmt und jeweils ein Wärmedämmelement 17, eine Wärmeverteilungsplatte 18 und eine Abdeckplatte 13 sind gemeinsam zu einem Fußboden-Randelement 19 zusammengefaßt. Die Abdeckplatte 13 eines solchen Fußboden-Randelementes 19 kann dabei beispielsweise über ein Schwenkgelenk mit der entsprechende Wärmeverteilungsplatte 18 verbunden sein, was aber in den Figuren im einzelnen nicht dargestellt ist.

Aus Fig. 1 ergibt sich deutlich, daß die Stütz- und Führungserhebungen 11 einen kreisrunden Querschnitt aufweisen und daß ihre Höhe geringfügig den Außendurchmesser der Heizrohre 8 überschreitet. Die Stütz- und Führungserhebungen 11 sind rasterartig mit einem Abstand angeordnet, der größer ist als der Außendurchmesser der Heizrohre 8. Dies ergibt sich insbesondere aus Fig. 3.

Aus Fig. 1 ergibt sich im übrigen noch, daß die Befestigungselemente 7 als jeweils zwei Heizrohre 8 miteinander verbindbare Befestigungsbügel ausgeführt sind und daß jeder Befestigungsbügel einen Verbindungssteg 20 und an den Enden des Verbindungssteges 20 angeordnete Aufnahmekammern 21 für die Heizrohre 8 aufweist. Die Länge der Verbindungsstege 20 der als Befestigungsbügel ausgeführten Befestigungselemente 7 definiert den Verlegeabstand für die Heizrohre 8.

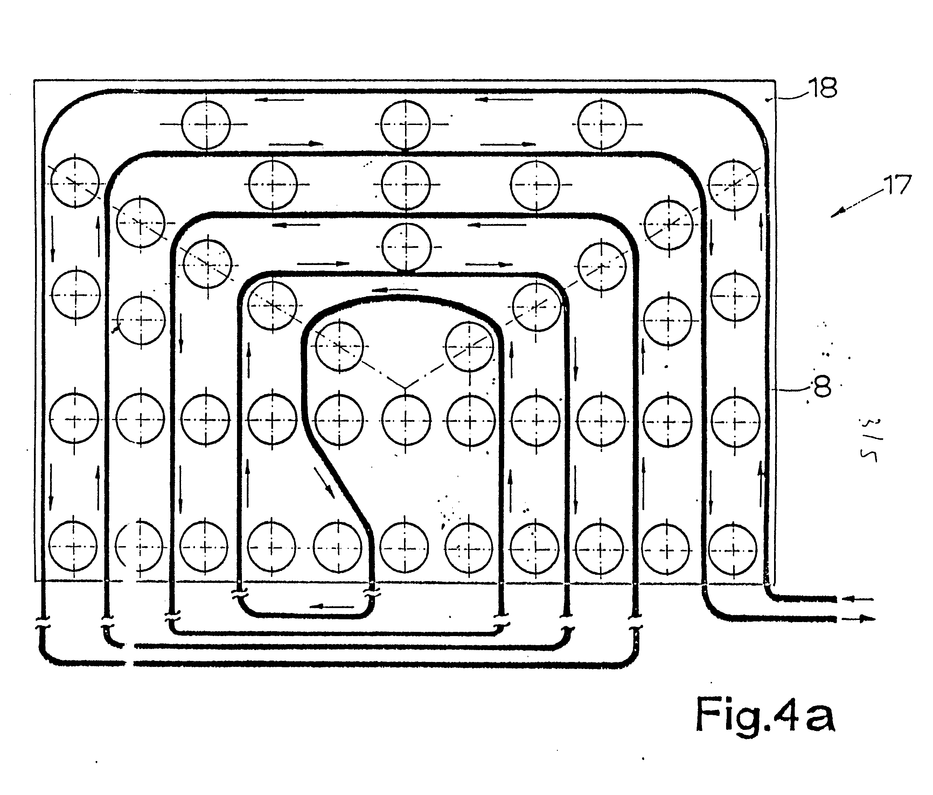

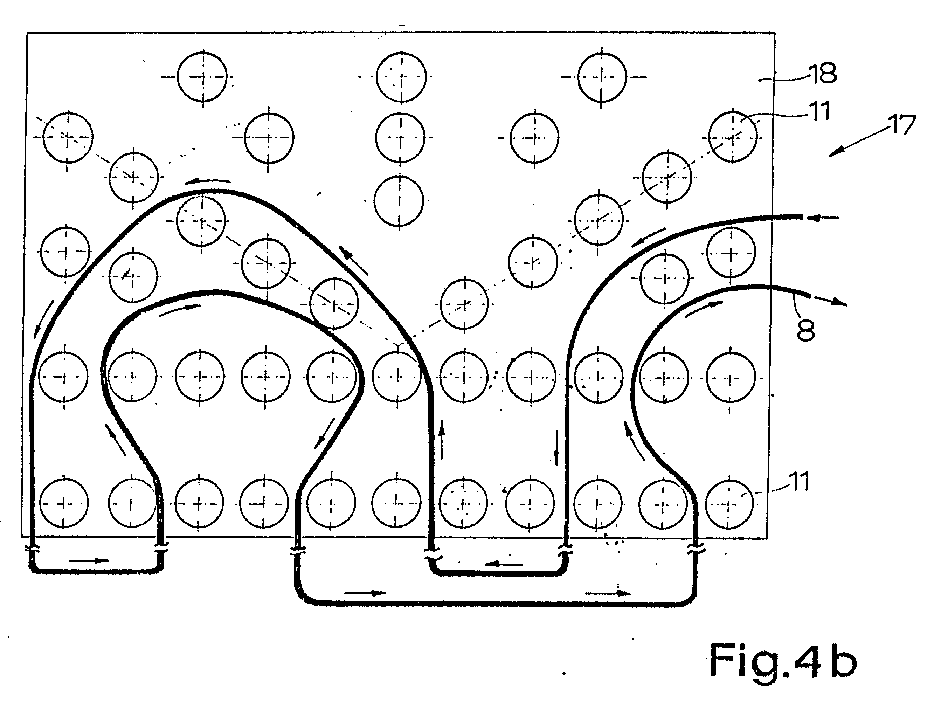

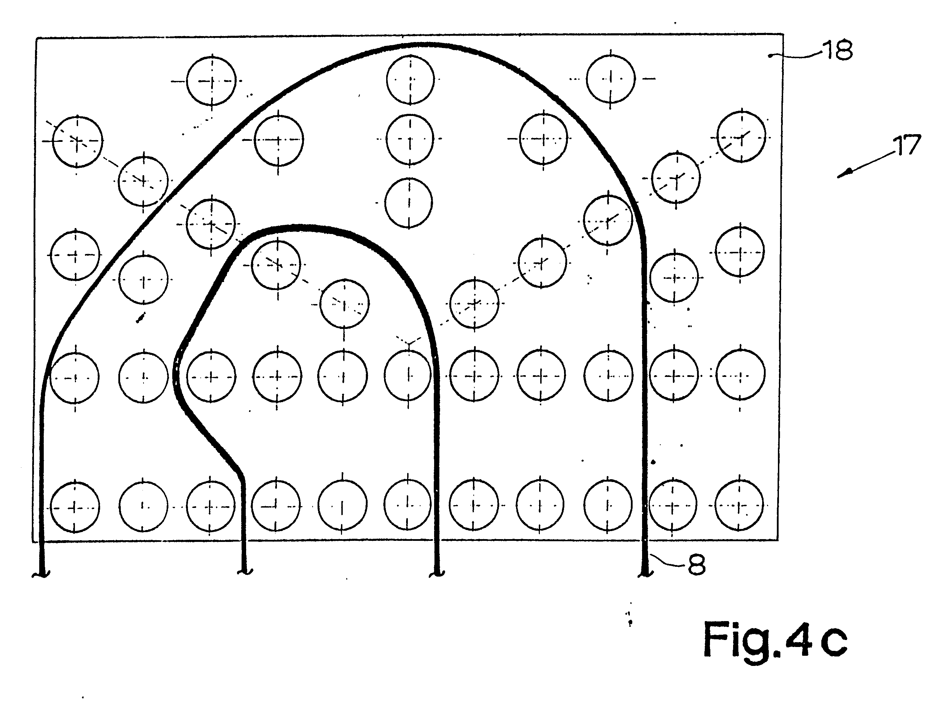

Fig. 4 zeigt ein Wärmedämmelement 17 mit einer aufgelegten Wärmeverteilungsplatte 18, aber ohne aufgelegte Abdeckplatte 13 in Draufsicht. Dabei ist gezeigt, wie mit ein und demselben Wärmedämmelement 17 Heizrohre 8 in unterschiedlichen Verlegeabständen verlegt werden können, ohne daß etwa die Mindestbiegeradien unterschritten werden. Die Durchflußrichtung eines Wärmeträgermediums ist dabei jeweils wieder angedeutet. Fig. 4a zeigt die Verlegedichte A 8, Fig. 4b die Verlegedichte A 16 und Fig. 4c die Verlegedichte A 25.

## Patentansprüche

1. Fußboden (1) mit integrierter Warmwasser-Fußbodenheizung (2) zum Aufbringen auf einen Fußbodenunterbau (3), bestehend aus einer Wärmedämmschicht (5), einer auf der Wärmedämmschicht (5) angeordneten, aus metallischen Wärmeverteilungsplatten (18) aufgebauten Zwischenschicht (6), einer Mehrzahl von auf der Zwischenschicht (6) angeordneten, über Befestigungselemente (7) gegen seitliches Verschieben gesicherten Heizrohren (8) und einer die Heizrohre (8) außerhalb des Randbereichs des Fußbodenunterbaus (3) einbettenden Estrichauflage (9), dadurch gekennzeichnet, daß die Wärmedämmschicht (5) im Randbereich des Fußbodenunterbaus (3) mit über die Ebene der Zwischenschicht (6) nach oben abragenden, rasterartig angeordneten Stütz- und Führungserhebungen (11) versehen ist, daß die Zwischenschicht (6) im Randbereich des Fußbodenunterbaus (3) mit zu den Stützund Führungserhebungen (11) korrespondierenden Ausnehmungen (12) versehen ist, daß die Heizrohre (8) zwischen den Stütz- und Führungserhebungen (11) verlaufend angeordnet sind und daß zusätzliche, auf den Stütz- und Führungserhebungen (11) aufliegende, metallische Abdeckplatten (13) vorgesehen sind, auf denen die Estrichauflage (9) aufgebracht ist.

2. Fußboden (1) nach Anspruch 1, dadurch gekennzeichnet, daß die Abdeckplatten (13) fest mit der Wärmedämmschicht (5) und/oder der Zwischenschicht (6) verbindbar sind.

3. Fußboden (1) nach Anspruch 1 oder 2, dadurch gekennzeichnet, daß für den Randbereich des Fußbodenunterbaus (3) mit den Stütz- und Führungserhebungen (11) versehene Wärmedämmelemente (17) vorgesehen sind.

4. Fußboden (1) nach Anspruch 3, dadurch gekennzeichnet, daß jeweils ein Wärmedämmelement (17), eine Wärmeverteilungsplatte (18) und eine Abdeckplatte (13) gemeinsam zu einem Fußboden-Randelement (19) zusammengefaßt sind.

5. Fußboden (1) nach einem der Ansprüche 1 bis 4, dadurch gekennzeichnet, daß die Stütz- und Führungserhebungen (11) einen im wesentlichen kreisrunden Querschnitt mit einem Durchmesser von 2 bis 8 cm, vorzugsweise von ca. 5 cm, aufweisen.

6. Fußboden (1) nach einem der Ansprüche 1 bis 5, dadurch gekennzeichnet, daß die Befestigungselemente (7) als jeweils zwei Heizrohre (8) miteinander verbindende Befestigungsbügel ausgeführt sind.

7. Fußboden (1) nach Anspruch 6, dadurch gekennzeichnet, daß jeder Befestigungsbügel einen Verbindungssteg (20) und an den Enden des Verbindungsstegs (20) angeordnete Aufnahmekammern (21) aufweist.

8. Fußboden (1) nach Anspruch 6 oder 7, dadurch gekennzeichnet, daß mehrere Befestigungsbügel einstückig miteinander ausgeführt sind.

9. Fußboden (1) nach einem der Ansprüche 1 bis 8, dadurch gekennzeichnet, daß auf die Heizrohre bereichsweise, insbesondere im Bereich von Dehnungsfugen, im Querschnitt im wesentlichen U-förmige Schutzbleche aufgesetzt sind.

10. Fußboden (1) nach einem der Ansprüche 1 bis 9, dadurch gekennzeichnet, daß zwischen den Wärmeverteilungsplatten und der Wärmedämmschicht eine dünne Zusatzschicht zur Verhinderung einer Wärmeabstrahlung in die Wärmedämmschicht vorgesehen ist.

11. Fußboden (1) nach Anspruch 10, dadurch gekennzeichnet, daß die Zusatzschicht fest mit der Unterseite der Wärmeverteilungsplatten verbunden und vorzugsweise als Lackschicht oder Kunststoffbeschichtung ausgeführt ist.

12. Fußboden (1) nach einem der Ansprüche 1 bis 11, dadurch gekennzeichnet, daß die Abdeckplatten auf der Unterseite mit einer die Wärmestrahlung von den Heizrohren absorbierenden Absorptionsschicht, vorzugsweise einer Lackschicht oder einer Kunststoffbeschichtung, versehen sind.

## Revendications

1. Sol (1) avec système de chauffage à l'eau chaude intégré (2), à disposer sur une couche de base (3), composée d'une couche thermo-isolante (5), d'une couche intermédiaire (6), composée de plaques de répartition de chaleur métalliques (18) et étendue sur cette couche thermoisolante (5), d'une pluralité de tubes chauffants (8), disposés sur ladite couche intermédiaire (6) et munis d'éléments de fixation (7) pour éviter leur déplacement latéral mutuel, et d'un hourdis ou pavement (9) enrobant lesdits tubes chauffants (8) en dehors de la zone marginale de ladite couche de base (3), caractérisé en ce que ladite couche thermo-isolante (5) est, dans la zone marginale de la couche de base (3), munie d'éléments de support et de guidage saillants (11), faisant saillie vers le haut au-dessus du plan de ladite couche intermédiaire (6) et disposés en réseau, en ce que cette couche intermédiaire (6) présente, dans la zone marginale de ladite couche de base (3), des trous (12) correspondant à ces éléments de support et de guidage saillants (11), en ce que lesdits tubes chauffants (8) s'étendent entre ces éléments de support et de guidage saillants (11), et en ce que sont prévues des plaques métalliques supplémentaires en guise de plaques de recouvrement (13), disposées sur lesdits éléments de support et de guidage saillants (11), plaques de recouvrement sur lesquelles est disposé ledit hourdis ou pavement (9).

2. Sol (1) selon la revendication 1, caractérisé en ce que lesdites plaques de recouvrement (13) peuvent être fixées à ladite couche thermo-isolante (5) et/ou à ladite couche intermédiaire (6).

3. Sol (1) selon la revendication 1 ou 2, caractérisé en ce que pour la zone marginale de ladite couche de base (3) sont prévus des éléments thermo-isolants (17) munis desdits éléments de support et de guidage saillants (11).

4. Sol (1) selon la revendication 3, caractérisé en ce que chaque élément thermo-isolant (17) est réuni avec une plaque de répartition de chaleur (18) et une plaque de recouvrement (13) de manière à former un élément de sol marginal (19).

5. Sol (1) selon l'une ou l'autre des revendications précédentes 1-4, caractérisé en ce que lesdits éléments de support et de guidage saillants (11) ont une section de forme pratiquement circulaire d'un diamètre de 2-8 cm, de préférence d'environ 5 cm.

6. Sol (1) selon l'une ou l'autre des revendications précédentes 1-5, caractérisé en ce que lesdits éléments de fixation (7) sont exécutés sous forme d'étriers de fixation, reliant chacun deux tubes chauffants (8).

7. Sol (1) selon la revendication 6, caractérisé en ce que chaque étrier de fixation est muni d'un élément de liaison transversal (20), muni de part et d'autre d'une chambre de support (21).

8. Sol (1) selon le revendication 6 ou 7, caractérisé en ce que plusieurs étriers sont ensemble venus d'une pièce.

9. Sol (1) selon l'une ou l'autre des revendications précédentes 1-8, caractérisé en ce que des plaques protectrices profilées pratiquement en U sont disposées sur lesdits tubes chauffants (8) à des endroits appropriés, en particulier au niveau des joints de dilatation.

10. Sol (1) selon l'une ou l'autre des revendications précédentes 1-9, caractérisé en ce qu'entre lesdites plaques de répartition de chaleur (18) et ladite couche thermo-isolante (5) est prévue une couche supplémentaire pour éviter la pénétration de chaleur rayonnante dans cette couche thermo-isolante (5).

11. Sol (1) selon la revendication 10, caractérisé en ce que ladite couche supplémentaire est fixée à la face inférieure des plaques de répartition de chaleur (18) et est exécutée de préférence sous forme d'une couche de laque ou d'une matière plastique appropriée.

12. Sol (1) selon l'une ou l'autre des revendications précédentes 1-11, caractérisé en ce que la face inférieure desdites plaques de recouvrement (13) est revêtue d'une couche, à savoir de préférence d'une couche de laque ou d'une matière plastique appropriée, servant à absorber la chaleur rayonnante émise par les tubes chauffants (8).

## Claims

1. A floor (1) with integral hot-water floor-heating (2), erected on a subfloor (3), consisting of a heat-insulating layer (5), an intermediate layer (6) constructed of metallic heat-distributing plates (18) and laid on the heat-insulating layer (5), a plurality of heating pipes (8) laid on the intermediate layer (6) and secured against lateral displacement by fastening units (7), and a plaster or stone floor surfacing (9) embedding the heating pipes (8) other than in the peripheral area of the subfloor (3), characterized in that in the peripheral area of the sub-floor (3), the heating-insulating layer (5) is provided with support and guidance protuberances projecting upwards above the plane of intermediate layer (6) and arranged in a regular pattern, that in the peripheral area of sub-floor (3) the intermediate layer (6) is provided with clearance holes (12) corresponding to the support and guidance protuberances (11), that the heating pipes (8) are arranged to extend between the support and guidance protuberances (11) and that additional metallic cover plates (13) are provided, resting on the support and guidance protuberances (11), on which cover plates the plaster or stone floor surfacing (9) is laid.

2. A floor (1) according to Claim 1, characterized in that the cover plates (13) are firmly securable to the heat-insulating layer (5) and/or to the intermediate layer (6).

3. A floor (1) according to Claim 1 or 2, characterized in that heat-insulating units (17) equipped with the support and guidance protuberances (11) are provided in the peripheral area of sub-floor (3).

4. A floor (1) according to Claim 3, characterized in that one each of a heat-insulating unit (17), a heat-distribution plate (18) and a cover plate (13) are combined together to form a floor edge unit (19).

5. A floor (1) according to one of Claims 1 to 4, characterized in that the support and guidance protuberances (11) have a basically circular cross-section with a diameter from 2 to 8 cm., preferably about 5 cm.

6. A floor (1) according to one of Claims 1 to 5, characterized in that the fastening units (7) are constructed as fastening stirrups each of which links two heating pipes (8) together.

7. A floor (1) according to Claim 6, characterized in that each fastening stirrup has a connecting strap (20) and holding recesses (21) located at the ends of the connecting strap (20).

8. A floor (1) according to Claim 6 or 7, characterized in that more than one fastening stirrup is made together as a one-piece construction.

9. A floor (1) according to one of Claims 1 to 8, characterized in that protective sheets of basically U-shaped section are mounted on to parts of the heating pipes, particularly in the region of expansion joints.

10. A floor (1) according to one of Claims 1 to 9, characterized in that a thin additional layer is provided between the heatdistributing plates and the heat-insulating layer to reduce heat radiation into the heatinsulating layer.

11. A floor (1) according to Claim 10, characterized in that the additional layer is firmly connected to the lower surface of the heat-distributing plates and is preferably in the form of a layer of paint or a plastics coating.

12. A floor (1) according to one of Claims 1 to 11, characterized in that the lower surface of the cover plates are provided with an absorption layer to absorb the heat radiation from the heating pipes, preferably a layer of paint or a plastics coating.

Fig. 1

**Fig. 2**

**Fig. 3**

Fig.4a

Fig.4b

Fig.4c